# EUROPEAN PATENT SPECIFICATION

(11) **EP 2 911 924 B1**
(45) Date of publication and mention of the grant of the patent: **21.06.2017**
(21) Application number: 12813262.8
(22) Date of filing: 02.11.2012
(51) Int. Cl.: B60T 13/66, B60T 13/68

(54) **ELECTRONICALLY CONTROLLED PNEUMATIC BRAKE SYSTEM FOR AN AUTOMOTIVE VEHICLE, AUTOMOTIVE VEHICLE EQUIPPED WITH SUCH A SYSTEM AND METHOD FOR CONTROLLING SUCH A SYSTEM**
ELEKTRONISCH GESTEUERTES FAHRHZEUGBREMSSYSTEM, -FAHRZEUG MIT SO EIN SYSTEM, UND STEUERVERFAHREN EINES SOLCHES SYSTEMS
CONTRÔLE ELECTRONIQUE D'UN FREINAGE PNEUMATIQUE D'UN VÉHICULE, VÉHICULE AVEC UN TEL SYSTÈME, ET PROCÉDÉ DE CONTRÔLE UN TEL SYSTÈME

(30) Priority: 25.10.2012 WO PCT/IB2012/003046
(43) Date of publication of application: 02.09.2015
(73) Proprietor: Volvo Truck Corporation, 405 08 Göteborg (SE)
(72) Inventor: FARRES, Lionel, 38540 Heyrieux (FR)
(74) Representative: Faucheux, Jérôme
(86) International application number: PCT/EP2012/004586
(87) International publication number: WO 2014/063720

(56) References cited:
- WO-A1-2006/097583
- WO-A2-03/008249
- WO-A2-03/008250

## Description

### TECHNICAL FIELD OF THE INVENTION

The present invention relates to an electronically controlled pneumatic brake system for an automotive vehicle. This invention also relates to an automotive vehicle equipped with such a system. Finally, the invention relates to a method for controlling such a system.

### BACKGROUND OF THE INVENTION

In the field of automotive vehicles, in particular trucks, it is known to use an air production module, such as disclosed in EP-B-1 406 805, in order to provide air under pressure to pneumatic brake actuators distributed next to brake mechanisms acting on disks fast in rotation with some wheels of the vehicle.

Some vehicles are equipped with an automatic park brake system which automatically operates when the vehicle stops. This can be useful when the driver actually wants to park the vehicle for a prolonged stop. However, this can also be cumbersome in case the driver wants to continue a journey, for instance in case a vehicle temporarily stops in a "stop and go" mode or in case of temporary stops on a hill slope. The park brakes are automatically actuated if the engine stops, which is often inappropriate and induces a delay when the truck must start its journey again.

### SUMMARY OF THE INVENTION

The aim of this invention is to provide a new electronically controlled pneumatic brake system with an improved safety and the ability to work, for example, in "stop and start" mode.

To this end, the invention concerns an electronically controlled pneumatic brake system for an automotive vehicle, this system comprising at least:
- a pneumatic brake actuator driving a respective brake mechanism having two brake chambers, wherein a first brake chamber comprises a spring to fulfill a park brake function and is fed with gas under pressure to release the park brake and wherein a second brake chamber is fed with gas under pressure to fulfill a service brake function ,
- a first electronic control unit adapted to process electric signals,
- an electro-pneumatic park brake module controlled by the first control unit and adapted to selectively deliver gas under pressure,
- a second electronic control unit adapted to process electric signals,
- an electro-pneumatic service brake module controlled by the second control unit and adapted to selectively deliver gas under pressure,
- a pneumatic park brake relay valve adapted to deliver gas under pressure to the first brake chamber and which is piloted by the higher pressure gas received from the electro-pneumatic park brake module or received from a connection valve,
- said connection valve,
wherein said connection valve is adapted to selectively connect an outlet port of the electro-pneumatic service brake module or a source of gas under pressure to an inlet of the pneumatic park brake relay valve.

Thanks to the invention, the connection valve can feed the pneumatic park brake relay valve with gas under pressure, even if the electro-pneumatic park brake module does not deliver gas under pressure. Thus, the pneumatic par brake relay valve is fed, on one inlet port at least, with gas under pressure, so that the pneumatic park brake relay valve operates to release the park brakes of the vehicle. So, the invention allows a temporary counteraction of the park brake function even if the first electronic unit requests an actuation of park brakes. This prevents the automatic actuation of the park brakes during a temporary stop such as in a "stop and start" mode.

Thanks to that it is avoided waste of time necessary to deactivate park brake function when the vehicle is restarted and overstress of the mechanical parts of the brake system and in particular of the park brake mechanical parts.

In such a situation the service brake function can be automatically activated to maintain the vehicle in a stop position or the service brake function can be automatically maintained after a manual actuation of the brake pedal to stop the vehicle. So the service brake function can be maintained without the activation of the park brake function avoiding overstress of the park brake mechanical parts.

According to further aspects of the invention which are advantageous but not compulsory, such a brake system may incorporate one or several of the following features:
- The connection valve is adapted, to selectively connect an outlet port of the electro-pneumatic service brake module or the source of gas under pressure to an inlet of the pneumatic park brake relay valve when the pressure of the gas delivered by the outlet port of the electro-pneumatic service brake module or a source of gas under pressure is higher than the pressure of the gas delivered by the electro-pneumatic park brake module.
- A selective valve is interposed between the electro-pneumatic park brake module, the connection valve and the pneumatic park brake relay valve, the selective valve having a first inlet port connected to an outlet port of the electro-pneumatic park brake module, a second inlet port connected to an outlet of the connection valve and an outlet port connected to a pilot inlet port of the pneumatic park brake relay valve, and wherein the connection valve is adapted to selectively connect the second inlet port of the selective valve to an outlet port of the electro-pneumatic service brake module or to a source of gas under pressure.
- The connection valve is a solenoid valve with a default position where it connects the outlet port of the electric service brake module to the second inlet port of the selective valve.
- The connection valve is preferably maintained is this position when, in a stop and start mode, stop conditions of the engine are not detected. Thanks to this connection the park brake force generated by brake actuators is limited when the service brake is already applied so that the braking force produced by actuators is maintained below a threshold value in order to avoid premature wear of the brake system and in particular of its mechanical parts.
- The solenoid connection valve is controlled by the second electronic control unit. Thanks to this aspect of the invention, a failure of a service brake part, for instance a malfunction of the electro-pneumatic service brake module, can be detected by the second electronic unit which can immediately switch the position of the connection valve from a current position where the second inlet port is connected to the source of gas under pressure to a position where the second inlet port is connected to the outlet port of the electro-pneumatic service brake module in order to enable the park brakes function and to authorize again the automatic actuation of the park brakes by the first electronic unit. Such an arrangement is safer and allows a greater reactivity than, for instance, an arrangement wherein the solenoid connection valve would be directly controlled by the first electronic control unit.
- The electric connection between the second electronic unit and the solenoid connection valve is controlled by the first electronic control unit.
- A switch is interposed along an electric connection line extending between the second electronic control unit and the solenoid connection valve and this switch is controlled by the first electronic control unit. Thanks to these arrangements and in case for instance of the detection of a default of the second electronic unit, in case of detection of a manual action for park brake activation, or in case of power shortage, the switch is controlled by the first electronic unit to be opened and the connection valve automatically switches in a default position where it connects the outlet port of the electric service brake module to the second inlet port of the double check valve so that the park brake function can be re-enable and park brake activated. The switch is preferably designed to automatically open the electric connection when it is not electrically powered by the first electronic unit.
- The connection valve is at least a three ports/two positions solenoid valve. Preferably the connection valve is a three ports/two positions solenoid valve and alternatively, the connection valve is a five ports/two positions solenoid valve.
- The connection valve has, in each position, an inlet port connected to the electric park brake module and an outlet port connected to a trailer control module of the electronically controlled pneumatic brake system.
- In a first position of the connection valve, its inlet and outlet ports, respectively connected to the electro-pneumatic park brake module and to the trailer control module, are in fluid communication and, in the second position of the connection valve, these inlet and outlet ports are fluidically disconnected.
- The selective valve is located outside the pneumatic park brake relay valve, which is a single stage valve. Alternatively, the selective valve is integrated within the pneumatic park brake relay valve. When the selective valve is integrated within the pneumatic park brake relay valve the combination of both valves can be designed as a double relay valve. In another alternative the selective valve can be integrated in the connection valve.
- The selective valve is pneumatically controlled.
- The selective valve is designed so that its outlet port is fed by the gas flow having the higher pressure between its first and its second inlet ports.
- The selective valve is a double check valve.

The invention also concerns an automotive vehicle, in particular a truck, equipped with an electronically controlled pneumatic brake system as mentioned here above.

Furthermore, the invention concerns a method for controlling an electronically controlled pneumatic brake system as mentioned here above, this method including at least the following steps:
- a) in case of stop of the vehicle engine, the first electronic control unit switches to a park brake mode where it controls the electro-pneumatic park brake module so that this module does not deliver gas,
- b) in case of automatic stop of the vehicle engine or detection of the conditions under which the vehicle engine is controlled to be automatically stopped and as long as no default is detected, the second control unit controls the connection valve so that the connection valve connects the inlet of the pneumatic park brake relay valve to the source of gas under pressure.

To be more precise and when a selective valve is interposed between the electro-pneumatic park brake module, the connection valve and the pneumatic park brake relay valve, in step b), in case of automatic stop of the vehicle engine or detection of the conditions under which the vehicle engine is controlled to be automatically stopped and as long as no default is detected, the second control unit controls the connection valve so that the connection valve connects the second inlet port of the selective valve to the source of gas under pressure.

In a third step c), preferably when the connection valve is controlled according to step b), the electro-pneumatic service brake module is controlled by the second control unit to deliver gas under pressure to the second chamber of pneumatic brake actuator in order to generate a braking effect.

According to another advantageous aspect of the invention, in case of control of the electro-pneumatic service brake module according to step c) the selected pressure of the gas delivered by the electric service brake module to the pneumatic brake actuator is adapted depending on at least the slope gradient and/or the vehicle's load. In other words higher is the slope gradient of the road or higher is the load of the vehicle and higher is the service brake force.

Thanks to this further aspect, the stress of the mechanical parts of the brake system is further reduced because, without actuation of the park brake function, only a necessary braking force is applied by service brake actuators.

According to an advantageous aspect of the invention, this method further includes the following steps which occur in case of the detection of a default, for instance in case of default of the second electronic unit or in case of power shortage; in case of detection of a manual action for park brake activation; or in case of detection of a prolonged stop of the vehicle:
- d) the first electronic control unit prevents the second control unit from controlling the connection valve, and
- e) the connection valve automatically connects the second inlet port of the double check valve to an outlet port of the electro-pneumatic service brake module.

The prolonged stop of the vehicle can be detected when for instance the vehicle is parked and when the user turns off the ignition key.

Thanks to this aspect the method is particularly safe when the vehicle stops on a hill. Because if, for instance, a failure of the service brake function occurs, the second control unit is able to immediately control the connection valve in order to connect the second inlet port of the double check valve to the outlet of the electro-pneumatic service brake module so that the park brake function is re-enable and park brake can be actuated to replace the service brake function that is defective. Thanks to that, the vehicle is maintained standstill even when such a failure occurs.

According to another aspect of the invention, in case of failure of the service brake function, in case of pressure drop in the pneumatic service brake circuit or in case the electro-pneumatic service brake module stops delivering gas under pressure to the pneumatic brake actuator, the connection valve is controlled by the second control unit to be switched in a position where the second inlet port is connected to the outlet port of the electro-pneumatic service brake module and the pneumatic park brake relay is commuted to a position where it does not provide air under pressure to first chamber of the brake actuator in order to generate a braking effect.

Finally, the invention concerns a second method for controlling an electronically controlled pneumatic brake system as mentioned here above, wherein, in case of stop of the vehicle on a hill slope or detection is about to stop on a hill-slope, the method includes at least the following steps :
- a) the first electronic control unit switches to a park brake mode where it controls the electro-pneumatic park brake module so that this module does not deliver gas,
- b) the second control unit controls the connection valve so that the connection valve connects the second inlet port of the selective valve to the source of gas under pressure,
- c) the electro-pneumatic service brake module is controlled by the second control unit to deliver gas under pressure to the second brake chamber of the pneumatic brake actuator in order to generate a braking effect due to the actuation of the spring.

Thanks to this method the vehicle can be maintained standstill on hill-slope when the engine is still operating and in a safe manner thanks to the automatic actuation of the service brake that can be automatically replaced, such as previously explained, by the park brake in case of failure of the service brake function. This method is very convenient for the driver because service brake can be automatically maintained until the system detects a restarting of the vehicle and service brake can be automatically and progressively released by the system when the vehicle restarts.

### BRIEF DESCRIPTION OF THE DRAWINGS

This invention will now be explained in correspondence with the following figures, as an illustrative example and without restricting its object. In the annexed figures :
- figure 1 is a schematic representation of an electronically controlled pneumatic brake system according to the invention,
- figure 2 is an enlarged view of detailed II of figure 1,
- figure 3 is a view similar to figure 1 when a connection valve of the system is in a second position and
- figures 4 to 6 are schematic representations similar to figure 1 for some electronically controlled pneumatic brake systems according to a second, a third and a fourth embodiment of the invention.

### DETAILED DESCRIPTION OF SOME EMBODIMENTS

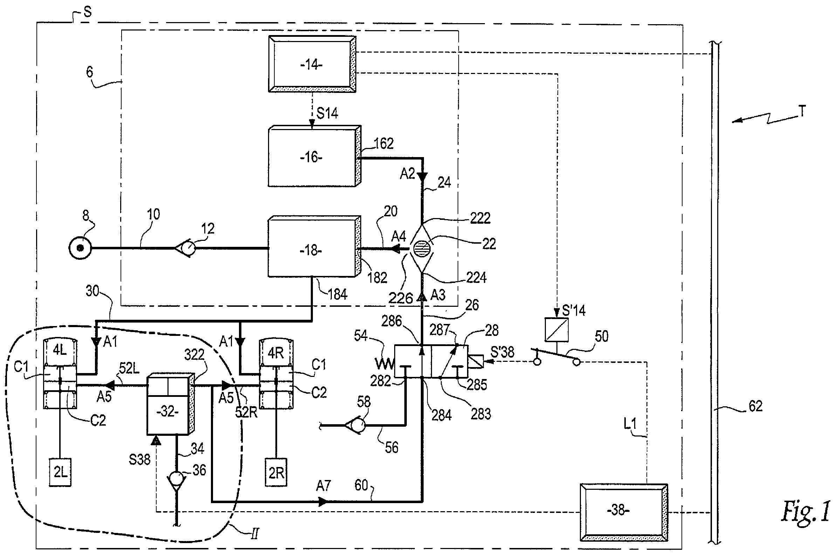

Some parts of a truck T are schematically represented on figures 1 to 3 and belong to an electronically controlled pneumatic brake system S which acts on the non-represented wheels of truck T.

On figures 1 to 3, pneumatic connection lines are represented with solid lines and electric connections are represented with dotted lines.

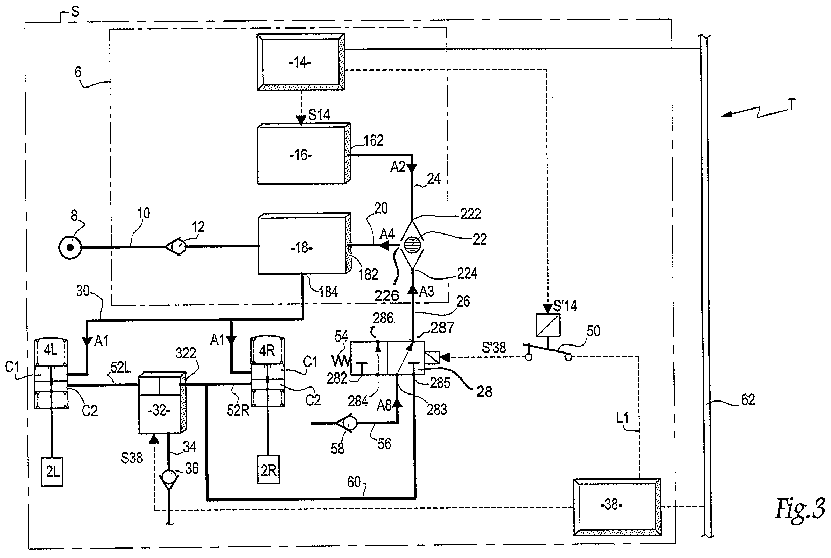

Figures 1 and 3 show two brake mechanisms 2L and 2R acting respectively on discs fast in rotation with some left wheels and right wheels on the vehicle. For example, these two brake mechanisms 2L and 2R can be placed on the level of the rear axle of truck T, whereas some other non represented brake mechanisms are placed at the level of the front axle of truck T. Each brake mechanism 2L or 2R is driven by a respective pneumatic brake actuator 4L or 4R. The brake actuators 4L and 4R are fed with air under pressure from an air production module 6, sometimes called "APM". APM 6 is fed with air under pressure by a compressor 8, which forms a source of air under pressure, via a first connecting line 10 which includes a check valve 12. APM 6 includes, amongst others, an electric park brake control unit 14 which drives an electro-pneumatic park brake command module 16, or "EPB" module, via an electric control signal S14. Module 16 is fed with air under pressure by non represented means, e.g. a connecting line originating at compressor 8. Such as the park brake control unit 14, module 16 and means to feed with air the module are generally part of the APM 6.

APM 6 also includes a pneumatic park brake relay valve 18 which receives air under pressure from compressor 8 via connecting line 10. Pneumatic brake relay valve 18 is pneumatically controlled by a control connecting line 20 which is selectively fed with air under pressure by a selective valve 22. In other words, control line 20 connects an outlet port 226 of selective valve 22 to a pilot inlet port 182 of pneumatic relay valve 18.

A first inlet port 222 of selective valve 22 is connected by a connecting line 24 to an outlet port 162 of EPB module 16, a second inlet port 224 of selective valve 22 is connected by a connecting line 26 to a connection valve, for instance, to a three ports/two position solenoid valve 28. It is noticed that different kinds of valve 28 could be used instead of a three ports/two position solenoid valve provided that they are adapted to selectively connect, such as described in detailed hereafter, the second inlet port 224 of the selective valve 22 to the outlet port 322 of the electro-pneumatic service brake module 32 or to the source 8 of gas under pressure. The valve 28 could be for instance a valve having five ports and having more than two positions.

The selective valve 22 can be embodied as a double check valve as represented schematically on figures 1 and 3 to 6. Such a valve 22 is designed so that its outlet port 226 is fed by the gas flow having the higher pressure between its first 222 and its second 224 inlet ports.

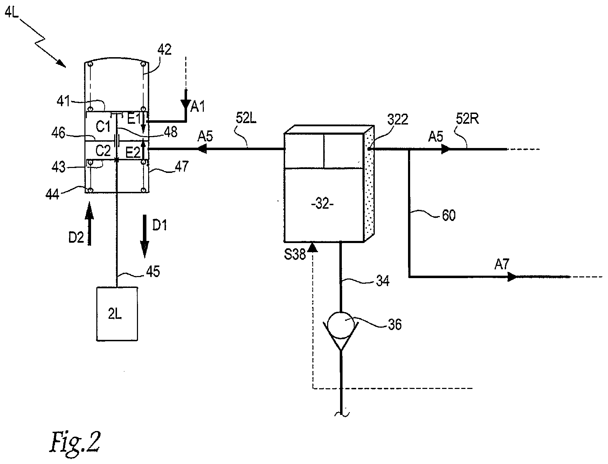

A shown on figure 2 for the left side of truck T, left brake actuator 4L includes a first piston 41 loaded by first spring 42 which exerts a first effort E1 in a first direction D1. Brake actuator 4L also includes a second piston 43 loaded by a second spring 44 which exerts a second effort E2 in a direction D2 opposite to direction D1. Piston 43 is fast with an output rod 45 of brake actuator 4L which drives the associated brake mechanism 2L. A fixed wall 46 is mounted within a housing 47 of brake actuator 4L. Wall 46 defines, respectively with pistons 41 and 43, two chambers C1 and C2 of a variable volume. The first chamber C1, the first piston 41 and the first spring 42 are used to perform the park brake function and the second chambers C2 and the second piston 43 are used to perform the service brake function. A rod 48 fixed on piston 43 crosses wall 46 in a tight manner and is adapted to bear against piston 41. The stiffness of springs 42 and 44 is chosen so that effort E1 is larger than effort E2. Thus, in absence of an air pressure within chambers C1 and C2, effort E1 pushes piston 41 in direction D1. This effort is transmitted by rod 48 and piston 43 to rod 45 which actuates the associated mechanism 2L in the first direction D1. Under such circumstances, brake mechanism 2L holds the brake disc(s) of the associated left wheel or wheels. This corresponds to the actuation of the park brake of truck T. In other words, when no air under pressure is provided to brake actuator 4L, 4R the park brake of truck T is actuated.

When air under pressure is provided to chamber C1, the air pressure within this chamber pushes piston 41 against the action of spring 42. On the other hand, spring 44 pushes piston 43 in direction D2. This corresponds to the release of the park brake of truck T by air pressure.

When the park brakes have been released and if air under pressure is provided to chamber C2, the air pressure within this chamber pushes piston 43 in direction D1, which progressively actuates brake mechanism 2L in order to brake the corresponding wheel or wheels. This corresponds to the actuation of the service brake of truck T.

The brake actuators of truck T work in the same way as the one represented on figure 2. Some wheels of the truck T may also be provided with brake actuators having no park brake chamber C1 and designed to only assure service brake function.

Park brake is spring actuated in the absence of pneumatic pressure in the first chamber C1 and is pneumatically released.

Service brake is pneumatically activated and deactivated in the absence of pressure in the second chamber C2.

System S controls the delivery of air under pressure, as a source of power, for brake mechanisms 2L and 2R to chambers C1 and C2 of the respective brake actuators 4L and 4R.

An outlet port 184 of pneumatic relay valve 18 is connected by a connection line 30 to the respective first chambers C1 of the brake actuators 4L and 4R. On figures 1 to 3, arrows A1 represent the air flow between relay valve 18 and chambers C1 of brake actuators 4L and 4R.

Similarly, arrows A2 represent the air flow between EPB module 16 and double check valve 22, arrows A3 represent the air flow between solenoid valve 28 and double check-valve 22 and arrows A4 represent the air flow in line 20 between double check-valve 22 and pneumatic relay valve 18.

Delivery of air under pressure to the second chambers C2 of the brake actuators 4L and 4R, that is actuation of the service brakes, is controlled by an electro-pneumatic brake module 32, often called "EBS" module. EBS module 32 is fed with air under pressure via a connecting line 34 which includes a check valve 36 and which is connected to a source of air under pressure, for instance a compressor 8 or a tank fed directly or via APM 6 by a compressor. This is not represented on figures 1 and 3 for the sake of simplicity. EBS module 32 is electronic controlled by an electronic control unit 38 which delivers to EBS module 32 an electric control signal S38.

EBS electronic control unit 38 controls the connection solenoid valve 28 via a second electronic control signal S'38 which goes through an electric line L1. An electrically driven switch 50 is interposed on line L1 between unit 38 and valve 28 and it is controlled by EPB electronic control unit 14 via a second electric signal S'14. By default, that is when power is supplied to it, switch 50 is in an closed configuration where unit 38 is able to control the connection solenoid valve 28. Switch 50 is preferably designed so that when no power is supplied to it, switch 50 automatically opens, thereby interrupting the electric line L1 and preventing the EBS electronic control unit 38 from controlling the connection solenoid valve 28.

EBS module 32 is connected to the second chambers C2 of brake actuators 4L and 4R via respective connecting lines 52L and 52R. Arrows A5 represent the air flow from EBS module 32 to chambers C2.

282, 284 and 286 respectively denote a first inlet port, a second inlet port, and a first outlet port of connection valve 28. Inlet port 282 is a dead end. Inlet port 284 is in fluid communication with outlet port 286. Ports 282, 284 and 286 belong to a first set of inlet/outlet ports of valve 28 which is active in the configuration of figure 1.

Solenoid valve 28 also includes a second set of inlet/outlet ports, with inlet ports 283 and 285 and outlet port 287. Inlet port 283 and outlet port 287 are in fluid communication, whereas inlet port 285 is a dead end.

A spring 54 urges connection valves 28 towards the configuration of figure 1. In other words, when EBS control unit 38 does not activate solenoid connection valve 28 via signal S'38 or when no electric power is applied to this valve, solenoid connection valve 28 is in the configuration of figure 1.

In this configuration, inlet port 284 is connected to connecting line 52R via a dedicated connecting line 60. In other words, inlet port 284 is fed with air under pressure at the same pressure as the air directed to the second chamber C2 of one of the brake actuators 4L and 4R, which is represented by arrows A7 on figure 1. 322 denotes the outlet port of electro-pneumatic service brake module 32 which is connected to connecting line 52R. Connecting line 52R and 60 connect together outlet port 322 and inlet port 284.

Under normal working condition of truck T, when this truck is moving, the park brake must be released and the service brake must be operational. In this configuration, EPB module 16 feeds double check valve 22 with air under pressure, as shown by arrows A2, at a pressure of about 8,5 bars, so that air at a pressure of at least 8,5 bars is provided to inlet port 182 of pneumatic relay valve 18, as shown by arrows A4. When it is piloted with air at such a high pressure, pneumatic relay valve 18 provides air under pressure coming from compressor 8 (or APM 6) to chambers C1 of brake actuators 4L and 4R, as shown by arrows A1.

If the driver uses the service brakes of truck T, EBS control unit 38 sends to EBS module 32 a control signal S38 so that EBS module 32 provides air under pressure to chambers C2 of brake actuators 4L and 4R, as shown by arrows A5. Air under pressure is then also provided via connecting line 60 to inlet port 284 of solenoid connection valve 28, as shown by arrows A7 and, through this valve, to the second inlet port 224 of double check valve 22, as shown by arrows A3. In the present embodiment, the pressure in lines 52R, 60 and 26 can be determined to not be higher than the pressure delivered by EPB module 16, therefore the air under pressure provided by EBS module 32 does not change the output pressure in control line 20. With this respect, double check valve 22 can be considered as a select high valve, insofar as it delivers to control line 20 some air at a pressure equal to the higher air pressure of air within connecting line 24 and 26.

When the connection valve 28 is switched in a position where the second inlet port 224 of the double check valve 22 is connected to the outlet port 322 of the electric service brake module 32, the provision of air to the double check valve 22 coming from EPB module 16 via connecting line 24 and from EBS module 32 via connecting lines 52R, 60 and 26 fulfils an anti-compound function, so that the air pressure in the control line 20, and so control air pressure fed to the relay valve 18, is at least equal to the air pressure delivered by EBS module 32 for the service brake.

The connection valve 28 is preferably maintained is this position when stop conditions of the engine are not detected in application of a stop and start mode and when the vehicle is not stopped or about to stop on a hill slope in application of an hill started mode. Thanks to this connection and thanks to the check valve 22, when the park brake is activated, by actuation of the spring 42, and if the service brake is also activated by a pneumatic pressure send to the second chamber C2, then same pressure is sent to the first chamber C1 to at least partly relieve the force exerted by the spring. Consequently, the park brake force is limited when the service brake is applied in such a manner that the addition of the brake force generated by the spring 42 and the force generated by the pressure in the second chamber C2 remains under a maximal force that is acceptable for the brake mechanism and in order to avoid premature wear of the mechanical parts of the brake system.

In case truck T temporarily stops, for instance at a traffic light and in case its engine stops or in case of detection of the conditions where its engine can be stopped (stop conditions of the engine) in application of a "stop and start" mode, EPB module 16 does not provide air under pressure to double check valve 22.

In this configuration, and insofar as the battery of truck T remains active and delivers a signal to the truck data bus 62, the corresponding information can be obtained by electronic control units 14 and 38. EPB control unit 14 uses this information to hold switch 50 in a closed configuration via signal S'14. EBS control unit 38 uses this information to switch solenoid connection valve 28 from the position of figure 1 to the position of figure 3.

In this position, inlet ports 283 and 285 and outlet port 287 are respectively connected to connecting lines 56, 60 and 26. As shown on figure 3, double check valve 22 is fed with air under pressure coming from the non represented source connected to line 56, as shown by arrow A8. In this position even if EPB module 16 does not deliver air under pressure to double check valve 22 or if this module delivers air under a low pressure, the air pressure within control line 20 remains above a threshold value, for instance 5,5 bars, since air under a relatively high pressure for instance between 5,5 and 8,5 bars is provided via connecting line 26. Under such circumstances, pneumatic relay valve 18 is piloted to provide air under pressure coming from compressor 8 to the first chambers C1 of brake actuators 4L and 4R, as in the configuration of figure 1. Thus, even if the engine of truck T is temporarily stopped, so that EPB module 16 does not provide air under pressure or provides air under low pressure, pneumatic relay valve 18 still provides air under pressure to chambers C1 since pneumatic relay valve 18 is controlled to do so via double check valve 22 and solenoid connection valve 28. Consequently in this position of valve 28 the park brake chamber C1 is maintained under a sufficient pressure to avoid park brake actuation when the engine engine of truck T is temporarily stopped.

On the other hand, EBS module 32 may provide in this case air under pressure to valve 28 even if the driver releases the service brake pedal. To be more precise, when the driver holds a pressure on the service brake pedal, the service brake is active. If the driver stops pressing on this service brake pedal, this is detected and the corresponding information is available on the data bus 62. Then, EBS control unit 38 may controls EBS module 32 via signal S38 in order to continue to deliver air to the second chambers C2 of brake actuators 4L and 4R.

In other words, when the truck T stops its engine in application of a "stop and start" mode, the park brakes remain in this case inactive and the service brakes may be maintained active even if the driver releases his pressure on the service brake pedal.

If for instance the vehicle stops in application of the stop and start mode, the conditions under which the vehicle engine can be automatically stopped may be :
- the vehicle speed is below a threshold value, for instance 5 km/h,
- the clutch is open and / or the gear box is in neutral position,
- the driver is actuating the service brake pedal or service brake lever.

The service brakes can be maintained instead of the park brakes, for example, until the driver actuates the accelerator pedal. The manual actuation of the accelerator pedal may for instance causes :
- the engine to restart,
- the first control unit 14 to control the electro-pneumatic park brake module 16 so that it delivers gas in order to deactivate the park brake function,
- the second control unit 38 to switch the connection valve 28 in order to connect the second inlet port 224 of the double check valve 22 to the outlet of the electro-pneumatic service brake module 32.

In a variation of the invention, the EBS control unit 38 is able to switch the solenoid connection valve 28 from the position of figure 1 to the position of figure 3 before the truck is completely stopped provided that the conditions under which the vehicle engine can be automatically stopped in application of a "stop and start" mode, are fulfilled.

In case of an electric failure within truck T, if for instance the battery load is too low to guarantee a safe operation of truck T, or in case the driver manually requests an actuation of the park brake, this is detected by EPB control unit 14 which activates switch 50 via signal S'14 in order to open this switch. Under such circumstances, insofar as signal S'38 cannot reach the solenoid port of connection valve 28, this valve 28 remains or is switched in the position of figure 1, under the action of spring 54. In such a case, EBS control unit 38 can control EBS module 32 via signal S38 in such a way that no service brake can be actuated. Then, no air is available for chambers C2 of brake actuators 4L and 4R. Since EPB module 16 does not provide air under pressure to the double check valve 22 via connecting line 24 and since no air under pressure is provided via connecting line 60, the air pressure within control line 20 is low or equal to zero, so that pneumatic relay valve 18 is controlled in order to deliver no air under pressure to chambers C1 of brake actuators 4L and 4R. Under such circumstances, piston 41 of the brake actuators moves in direction D2 and the park brakes are actuated.

The switch 50 can also be designed so that an absence of signal S'14, due for instance to a power shortage, causes an automatic opening of the switch 50.

In case of failure of the service brake function caused, for instance, by a malfunction of the electro-pneumatic service brake module 32 or in case of failure causing a pressure drop within chambers C2 and connecting lines 52L, 52R and 60, the EBS electronic control unit 38 can be configured to immediately detect such a failure and can immediately switch the position of the connection valve 28 from a current position where the second inlet port 224 is connected to the source 8 of gas under pressure (figure 3) to a position where the second inlet port 224 of the double check valve 22 is connected to the outlet port 322 of the electro-pneumatic service brake module 32 (figure 1) in order to enable the park brake function and to authorize again automatic actuation of the park brakes by the park brake control unit 14.

It is noticed that a failure of the service brake function caused for instance by a failure of the electro-pneumatic service brake module 32 (EBS module) can also be detected by the park brake control unit 14 that can open switch 50.

Thanks to this aspect, the method is particularly safe when the vehicle stops on a hill. Because if, for instance, a failure of the service brake function occurs, the EBS electronic control unit 38 is able to immediately control the connection valve 28 in order to connect the second inlet port 224 of the double check valve to the outlet 322 of the electro-pneumatic service brake module 32 so that the park brake function is re-enable and, because EPB module 16 does not provide air under pressure to the double check valve 22, park brake is automatically actuated to replace inoperative service brake function. Thanks to that the vehicle is maintained stop even when such a failure occurs.

In other words, thanks to the invention, a hill start aid function can be very simple to use for the driver, with an extra safety feature because the park brakes are automatically actuated in case of a failure of the service brake function.

In case truck T is fully operational and the driver wants to actually park it then, once truck T is at the right position, the driver turns off the truck engine and removes the ignition key or take any other measure to signify that the truck T must be parked or must be stop for a prolonged time. This is detected and corresponding information is transmitted via data bus 62 to the electronic control unit 14 which uses signal S'14 to commute switch 50 to its open position, so that solenoid valve 28 remains in the position of figure 1 under the action of spring 54 and the park brake mechanism is actuated as soon as EPB module 16 does not deliver air under pressure to double check valve 22.

In case the truck is parked, it could also be envisaged that, instead of commuting switch 50 to its open position, the EBS electronic control unit 38 controls directly the solenoid valve 28 to maintain it in the position of figure 1.

The safety of the system S of the invention is also improved by the fact that switch 50 can be designed so that it automatically opens when it is not powered. Thus, in case of failure in the power feeding of electronic control unit 14, this unit cannot deliver control signal S'14 and this switch 50 remains open so that solenoid connection valve 28 remains or is automatically switched in the configuration of figure 1, which is the safe position allowing actuation of the park brake mechanism of truck T.

One notices that the diameter and length of connecting line 26 can be chosen with low values, so that the internal volume of this connecting line is small. This guarantees a short reaction time for double check valve 22. Moreover, control line 20 has also a small volume, which also guarantees a short reaction time for pneumatic relay valve 18.

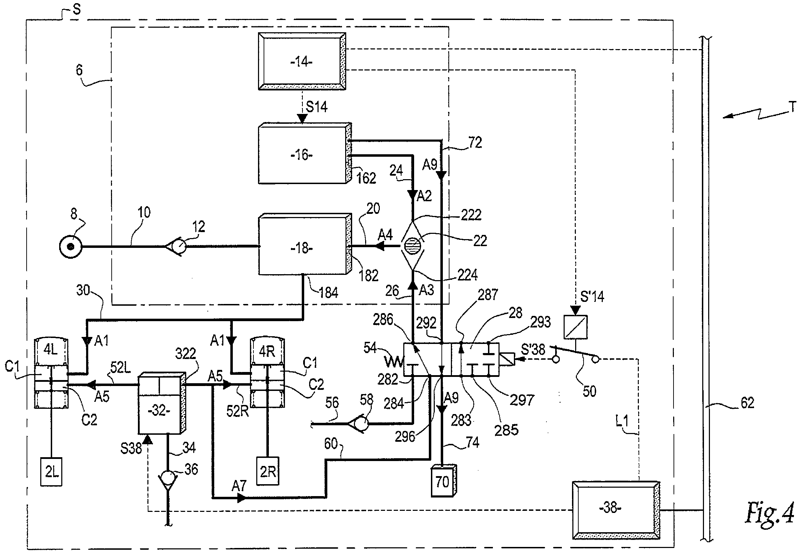

In the second, third and fourth embodiments of the invention represented on figures 4 to 6, the elements similar to the ones of the first embodiment have the same references and work in the same way. Here after, only the differences with respect to the first embodiment are described.

In the embodiment of figure 4, truck T is provided with a trailer and the electronic controlled pneumatic brake system S includes a trailer control module 70. Solenoid communication valve 28 is a five inlets-outlets/two positions solenoid valve. More precisely, solenoid valve 28 includes two inlet ports 282 and 284 and one outlet port 286 similar to the ones of the first embodiment. Solenoid valve 28 also includes a third inlet port 292 and a second outlet port 296. A connecting line 72 extends between EPB module 16 and inlet port 292 and a second connecting line 74 extends between outlet port 296 and trailer control module 70.

The ports 282, 284, 286, 292 and 296 are active in the first configuration of solenoid valve 28 represented on figure 4. The main difference with respect to the first embodiment is that, in this configuration, air under pressure can circulate from EPB module 16 to trailer control module 70 via connecting lines 72 and 74 and via connecting valve 28, as shown by arrows A9.

Solenoid valve 28 also has inlet ports 283 and 285 and an outlet port 287 similar to the ones of the first embodiment. Solenoid valve 28 also has a third inlet port 293 and a second outlet port 297 which are not connected to each other through valve 28.

In the activated configuration of solenoid valve 28, that is when the electric signal S'38 provided by EBS control unit 38 to connection valve 28 moves this valve against the action of spring 54, inlet ports 283, 285 and 293 and outlet ports 287 and 297 are respectively connected to connection lines 56, 60, 26, 72 and 74.

Thus, in case connection valve 28 moves to a non-represented position which is similar to the one of figure 3 for the first embodiment, trailer control module 70 is automatically disconnected from EPB module 16.

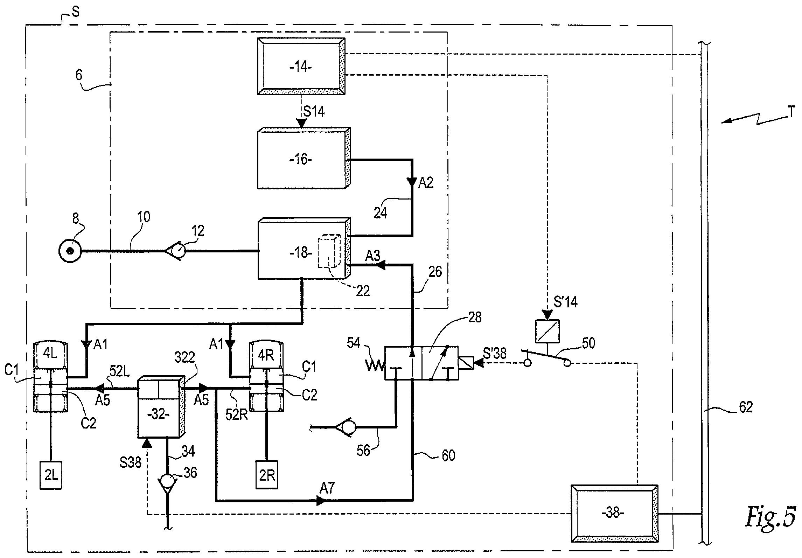

In the third embodiment of figure 5, a double check valve similar to check valve 22 of the first two embodiments is integrated within pneumatic relay valve 18. Thus, pneumatic relay valve 18 is directly connected, respectively to EPB modules 16 and to connection valve 28 via connecting lines 24 and 26.

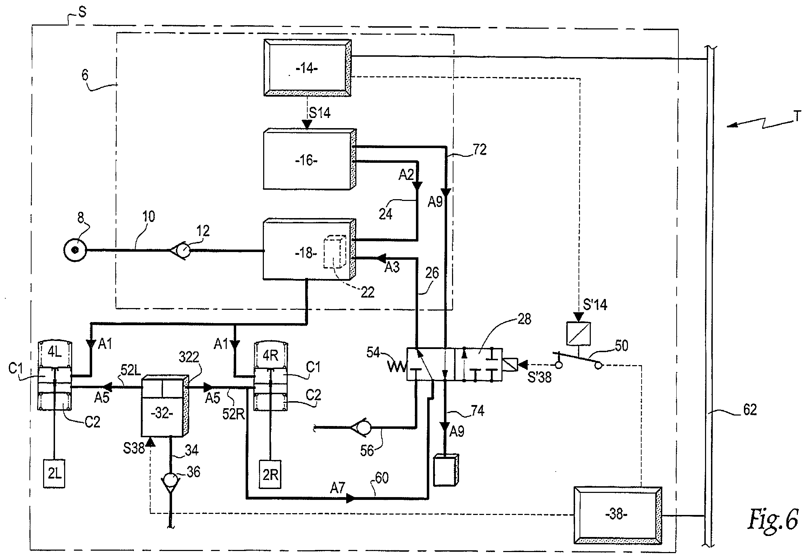

The fifth embodiment of figure 6 is a combination of the embodiments of figures 4 and 5. A five inlet-outlet connection solenoid valve 28 is used to feed, amongst others, a trailer control module 70 and the double check valve 22 is integrated within the pneumatic relay valve 18.

The invention is described here above in case the power fluid and the control fluid is air. Alternatively, other gases can be used.

The technical features of the embodiments and variants mentioned here above can be combined.

## Claims

1. Electronically controlled pneumatic brake system (S) for an automotive vehicle (T), wherein said system comprises at least :
- a pneumatic brake actuator (4L, 4R) driving a respective brake mechanism (2L, 2R) having two brake chambers, wherein a first brake chamber (C1) comprises a spring (42) to fulfill a park brake function and is fed with gas under pressure to release the park brake and wherein a second brake chamber (C2) is fed with gas under pressure to fulfill a service brake function ,
- a first electronic control unit (14) adapted to process electric signals (S14, S'14),
- an electro-pneumatic park brake module (16) controlled by the first electronic control unit (14) and adapted to selectively deliver gas under pressure,
- a second electronic control unit (38) adapted to process electric signals (S38, S'38),
- an electro-pneumatic service brake module (32) controlled by the second electronic control unit (38) and adapted to selectively deliver gas under pressure,
- a pneumatic park brake relay valve (18) adapted to deliver gas under pressure (A1) to the first brake chamber (C1) and which is piloted by the higher pressure gas received from the electro-pneumatic park brake module (16) or received from a connection valve (28),
wherein said connection valve (28) is adapted to selectively connect an outlet port (322) of the electro-pneumatic service brake module (32) or a source (8) of gas under pressure to a pilot inlet (182) of the pneumatic park brake relay valve (18).

2. Electronically controlled pneumatic brake system according to claim 1, wherein the connection valve (28) is adapted, to selectively connect an outlet port (322) of the electro-pneumatic service brake module (32) or the source (8) of gas under pressure to an inlet of the pneumatic park brake relay valve (18) when the pressure of the gas delivered by the outlet port (322) of the electro-pneumatic service brake module (32) or a source (8) of gas under pressure is higher than the pressure of the gas delivered by the electro-pneumatic park brake module (16).

3. Electronically controlled pneumatic brake system according to claim 1 or 2, wherein a selective valve (22) is interposed between the electro-pneumatic park brake module (16), the connection valve (28) and the pneumatic park brake relay valve (18), the selective valve (22) having a first inlet port (222) connected to an outlet port (162) of the electro-pneumatic park brake module (16), a second inlet port (224) connected to an outlet of the connection valve (28) and an outlet port (226) connected to a pilot inlet port (182) of the pneumatic park brake relay valve (18), and wherein the connection valve (28) is adapted to selectively connect the second inlet port (224) of the selective valve (22) to an outlet port (322) of the electro-pneumatic service brake module (32) or to a source (8) of gas under pressure.

4. Electronically controlled pneumatic brake system according to claim 3, wherein the connection valve is a solenoid valve (28) with a default position where it connects the outlet port (322) of the electro-pneumatic service brake module (32) to the second inlet port (224) of the selective valve (22).

5. Electronically controlled pneumatic brake system according to claim 4, wherein the solenoid connection valve (28) is controlled (S'38) by the second electronic control unit (38).

6. Electronically controlled pneumatic brake system according to claim 5, wherein the electric connection between the second electronic unit (38) and the solenoid connection valve (28) is controlled (S'14) by the first electronic control unit (14).

7. Electronically controlled pneumatic brake system according to claim 6, wherein a switch (50) is interposed along an electric connection line (L1) extending between the second electronic control unit (38) and the solenoid connection valve (28) and this switch is controlled (S'14) by the first electronic control unit (14).

8. Electronically controlled pneumatic brake system according to any preceding claim, wherein the connection valve (28) is a three ports / two positions solenoid valve (28).

9. Electronically controlled pneumatic brake system according to any of claims 1 to 7, wherein the connection valve is a five ports/two positions solenoid valve (28).

10. Electronically controlled pneumatic brake system according to claim 9 wherein the connection valve (28) has, in each position, an inlet port (292, 293) connected to the electro-pneumatic park brake module (16) and an outlet (296, 297) port connected to a trailer control module (70) of the electronically controlled pneumatic brake system (S).

11. Electronically controlled pneumatic brake system according to claim 10 wherein in a first position of the connection valve (28), its inlet and outlet ports (292, 296), respectively connected to the electro-pneumatic park brake module (16) and to the trailer control module (70), are in fluid communication and, in the second position of the connection valve, its inlet and outlet ports (293, 297) are fluidically disconnected.

12. Electronically controlled pneumatic brake system according to any preceding claim in combination with claim 3 wherein the selective valve (22) is located outside the pneumatic park brake relay valve (18), which is a single stage valve.

13. Electronically controlled pneumatic brake system according to any one of claims 1 to 11 in combination with claim 3 wherein the selective valve (22) is integrated within the pneumatic park brake relay valve (18).

14. Electronically controlled pneumatic brake system according to any preceding claims in combination with claim 3 wherein the selective valve (22) is pneumatically controlled.

15. Electronically controlled pneumatic brake system according to any preceding claims in combination with claim 3 wherein the selective valve (22) is designed so that its outlet port (226) is fed by the gas flow having the higher pressure between its first and its second inlet ports (222, 224).

16. Electronically controlled pneumatic brake system according to to any preceding claims in combination with claim 3 wherein the selective valve (22) is a double check valve.

17. An automotive vehicle (T) in particular a truck, provided with an electronically controlled pneumatic brake system (S) according to any preceding claim.

18. A method for controlling an electronically controlled pneumatic brake system (S) according to one of claims 1 to 16, wherein this method includes at least the following steps :
- a) in case of stop of the vehicle engine, the first electronic control unit (14) switches to a park brake mode where it controls the electro-pneumatic park brake module (16) so that this module does not deliver gas,
- b) in case of automatic stop of the vehicle engine or detection of the conditions under which the vehicle engine is controlled to be automatically stopped and as long as no default is detected, the second control unit (38) controls the connection valve (28) so that the connection valve connects the pilot inlet (182) of the pneumatic park brake relay valve (18) to the source (8) of gas under pressure.

19. A method for controlling an electronically controlled pneumatic brake system (S) according to claim 18 in combination with claim 3, wherein in the step b) in case of automatic stop of the vehicle engine or detection of the conditions under which the vehicle engine is controlled to be automatically stopped and as long as no default is detected, the second control unit (38) controls the connection valve (28) so that the connection valve connects the second inlet port (224) of the selective valve (22) to the source (8) of gas under pressure.

20. Method according to claim 18 or 19, wherein it further includes the following step :
- c) the electro-pneumatic service brake module (32) is controlled by the second control unit (38) to deliver gas under pressure to the second chamber (C2) of the pneumatic brake actuator (4L, 4R) in order to generate a braking effect.

21. Method according to any of claims 19 or 20 wherein it further includes the following steps which occur in case of default, detection of a manual action for park brake activation, or detection of a prolonged stop of the vehicle :
- d) the first electronic control unit (14) prevents the second control unit (38) from controlling the connection valve (28), and
- e) the connection valve (28) automatically connects the second inlet port (224) of the selective (22) valve to an outlet port (322) of the electro-pneumatic service brake module (32).

22. Method according to claims 19 and 20, wherein , in case of failure of the service brake function or in case the electro-pneumatic service brake module (32) stops delivering gas under pressure to the pneumatic brake actuator (4L, 4R), the connection valve (28) is controlled by the second control unit (38) to be switched in a position where the second inlet port (224) of the selective valve (22) is connected to the outlet port (322) of the electro-pneumatic service brake module (32) and the pneumatic park brake relay valve (18) is commuted to a position where it does not provide air under pressure to the first chamber (C1) of the brake actuator (4L, 4R) in order to generate a braking effect.

23. A method for controlling an electronically controlled pneumatic brake system (S) according to any of claims 1 to 16 in combination with claim 3, wherein, in case of stop of the vehicle on a hill slope or detection the vehicle is about to stop on a hill slope, the method includes at least the following steps :
- a) the first electronic control unit (14) switches to a park brake mode where it controls the electro-pneumatic park brake module (16) so that this module does not deliver gas,
- b) the second control unit (38) controls the connection valve (28) so that the connection valve connects the second inlet (224) port of the selective valve (22) to the source (8) of gas under pressure,
- c) the electro-pneumatic service brake module (32) is controlled by the second control unit to deliver gas under pressure to the second brake chamber (C1) of the pneumatic brake actuator (4L, 4R) in order to generate a braking effect.

## Patentansprüche

1. Elektronisch gesteuertes Pneumatikbremssystem (S) für ein Kraftfahrzeug (T), wobei das System wenigstens umfasst:
- ein pneumatisches Bremsstellglied (4L, 4R), das einen jeweiligen Bremsmechanismus (2L, 2R) antreibt, der zwei Bremskammern aufweist, wobei eine erste Bremskammer (C1) eine Feder (42) umfasst, um eine Parkbremsfunktion zu erfüllen, und ihr unter Druck stehendes Gas zugeführt wird, um die Parkbremse zu lösen, und wobei einer zweiten Bremskammer (C2) unter Druck stehendes Gas zugeführt wird, um eine Betriebsbremsfunktion zu erfüllen,
- eine erste elektronische Steuereinheit (14), die zum Verarbeiten elektrischer Signale (S14, S'14) geeignet ist,
- ein elektro-pneumatisches Parkbremsmodul (16), das von der ersten elektronischen Steuereinheit (14) gesteuert ist und zum selektiven Abgeben von unter Druck stehendem Gas geeignet ist,
- eine zweite elektronische Steuereinheit (38), die zum Verarbeiten elektrischer Signale (S38, S'38) geeignet ist,
- ein elektro-pneumatisches Betriebsbremsmodul (32), das von der zweiten elektronischen Steuereinheit (38) gesteuert wird und zum selektiven Abgeben von unter Druck stehendem Gas geeignet ist,
- ein Pneumatikparkbremsrelaisventil (18), das zum Abgeben von unter Druck stehendem Gas (A1) zu der ersten Bremskammer (C1) geeignet ist und das von dem unter höherem Druck stehenden Gas angesteuert wird, das von dem elektro-pneumatischen Parkbremsmodul (16) oder von einem Verbindungsventil (28) erhalten wird,
- wobei das Verbindungsventil (28) zum selektiven Verbinden einer Ausgangsöffnung (322) des elektro-pneumatischen Betriebsbremsmoduls (32) oder einer Quelle (8) von unter Druck stehendem Gas mit einem Piloteinlass (182) des Pneumatikparkbremsrelaisventils (18) geeignet ist.

2. Elektronisch gesteuertes Pneumatikbremssystem nach Anspruch 1, wobei das Verbindungsventil (28) zum selektiven Verbinden einer Auslassöffnung (322) des elektro-pneumatischen Betriebsbremsmoduls (32) oder der Quelle (8) von unter Druck stehendem Gas mit einem Einlass des Pneumatikparkbremsrelaisventils (18) geeignet ist, wenn der Druck des von der Auslassöffnung (322) des elektro-pneumatischen Betriebsbremsmoduls (32) oder einer Quelle (8) von unter Druck stehendem Gas abgegebenen Gases höher als der Druck des von dem elektro-pneumatischen Parkbremsmodul (16) abgegebenen Gases ist.

3. Elektronisch gesteuertes Pneumatikbremssystem nach Anspruch 1 oder 2, wobei ein selektives Ventil (22) zwischen dem elektro-pneumatischen Parkbremsmodul (16), dem Verbindungsventil (28) und dem Pneumatikparkbremsrelaisventil (18) positioniert ist, wobei das selektive Ventil (22) eine erste Einlassöffnung (222), die mit einer Auslassöffnung (162) des elektro-pneumatischen Parkbremsmoduls (16) verbunden ist, eine zweite Einlassöffnung (224), die mit einem Auslass des Verbindungsventils (28) verbunden ist, und eine Auslassöffnung (226) aufweist, die mit einer Piloteinlassöffnung (182) des Pneumatikparkbremsrelaisventils (18) verbunden ist, und wobei das Verbindungsventil (28) zum selektiven Verbinden der zweiten Einlassöffnung (224) des selektiven Ventils (22) mit einer Auslassöffnung (322) des elektro-pneumatischen Betriebsbremsmoduls (32) oder mit einer Quelle (8) von unter Druck stehendem Gas geeignet ist.

4. Elektronisch gesteuertes Pneumatikbremssystem nach Anspruch 3, wobei das Verbindungsventil ein Solenoid-Ventil (28) mit einer Voreinstellung ist, in der es die Auslassöffnung (322) des elektro-pneumatischen Betriebsbremsmoduls (32) mit der zweiten Einlassöffnung (224) des selektiven Ventils (22) verbindet.

5. Elektronisch gesteuertes Pneumatikbremssystem nach Anspruch 4, wobei das Solenoid-Verbindungsventil (28) von der zweiten elektronischen Steuereinheit (38) gesteuert wird.

6. Elektronisch gesteuertes Pneumatikbremssystem nach Anspruch 5, wobei die elektrische Verbindung zwischen der zweiten elektronischen Einheit (38) und dem Solenoid-Verbindungsventil (28) von der ersten elektronischen Steuereinheit (14) gesteuert (S'14) wird.

7. Elektronisch gesteuertes Pneumatikbremssystem nach Anspruch 6, wobei ein Schalter (50) entlang einer sich zwischen der zweiten elektronischen Steuereinheit (38) und dem Solenoid-Verbindungsventil (28) erstreckenden elektrischen Verbindungsleitung (L1) zwischenpositioniert ist und dieser Schalter von der ersten elektronischen Steuereinheit (14) gesteuert (S'14) wird.

8. Elektronisch gesteuertes Pneumatikbremssystem nach einem vorhergehenden Anspruch, wobei das Verbindungsventil (28) ein Solenoid-Ventil (28) mit drei Öffnungen/zwei Positionen ist.

9. Elektronisch gesteuertes Pneumatikbremssystem nach einem der Ansprüche 1 bis 7, wobei das Verbindungsventil ein Solenoid-Ventil (28) mit fünf Öffnungen/zwei Positionen ist.

10. Elektronisch gesteuertes Pneumatikbremssystem nach Anspruch 9, wobei das Verbindungsventil (28) in jeder Position eine Einlassöffnung (292, 293), die mit dem elektro-pneumatischen Parkbremsmodul (16) verbunden ist, und eine Auslassöffnung (296, 297) aufweist, die mit einem Anhängersteuermodul (70) des elektronisch gesteuerten Pneumatikbremssystems (S) verbunden ist.

11. Elektronisch gesteuertes Pneumatikbremssystem nach Anspruch 10, wobei in einer ersten Position des Verbindungsventils (28) seine Einlass- und Auslassöffnungen (292, 296), die jeweils mit dem elektro-pneumatischen Parkbremsmodul (16) und dem Anhängersteuermodul (70) verbunden sind, in Fluidverbindung stehen, und in der zweiten Position des Verbindungsventils seine Einlass- und Auslassöffnungen (293, 297) nicht in Fluidverbindung stehen.

12. Elektronisch gesteuertes Pneumatikbremssystem nach einem vorhergehenden Anspruch in Kombination mit Anspruch 3, wobei das selektive Ventil (22) außerhalb des Pneumatikparkbremsrelaisventils (18) angeordnet ist, das ein Einstufenventil ist.

13. Elektronisch gesteuertes Pneumatikbremssystem nach einem der Ansprüche 1 bis 11 in Kombination mit Anspruch 3, wobei das selektive Ventil (22) innerhalb des Pneumatikparkbremsrelaisventils (18) integriert ist.

14. Elektronisch gesteuertes Pneumatikbremssystem nach vorhergehenden Ansprüchen in Kombination mit Anspruch 3, wobei das selektive Ventil (22) pneumatisch gesteuert wird.

15. Elektronisch gesteuertes Pneumatikbremssystem nach vorhergehenden Ansprüchen in Kombination mit Anspruch 3, wobei das selektive Ventil (22) so ausgelegt ist, dass seiner Auslassöffnung (226) die Gasströmung zugeführt wird, die zwischen seiner ersten und seiner zweiten Einlassöffnung (222, 224) den höheren Druck aufweist.

16. Elektronisch gesteuertes Pneumatikbremssystem nach vorhergehenden Ansprüchen in Kombination mit Anspruch 3, wobei das selektive Ventil (22) ein Doppelrückschlagventil ist.

17. Kraftfahrzeug (T), insbesondere Lastkraftwagen, das mit einem elektronisch gesteuerten Pneumatikbremssystem (S) nach einem vorhergehenden Anspruch versehen ist.

18. Verfahren zum Steuern eines elektronisch gesteuerten Pneumatikbremssystems (S) nach einem der Ansprüche 1 bis 16, wobei dieses Verfahren wenigstens die folgenden Schritte umfasst:
- a) im Falle eines Fahrzeugmotorstopps schaltet die erste elektronische Steuereinheit (14) in einen Parkbremsmodus, in dem sie das elektro-pneumatische Parkbremsmodul (16) so steuert, dass dieses Modul kein Gas abgibt,
- b) im Falle eines automatischen Stopps des Fahrzeugmotors oder einer Erfassung der Bedingungen, unter denen der Fahrzeugmotor so gesteuert wird, dass er automatisch gestoppt wird, und so lange kein Fehler erfasst wird, steuert die zweite Steuereinheit (38) das Verbindungsventil (28) so, dass das Verbindungsventil den Piloteinlass (182) des Pneumatikparkbremsrelaisventils (18) mit der Quelle (8) von unter Druck stehendem Gas verbindet.

19. Verfahren zum Steuern eines elektronisch gesteuerten Pneumatikbremssystems (S) nach Anspruch 18 in Kombination mit Anspruch 3, wobei im Schritt b) im Falle eines automatischen Stopps des Fahrzeugmotors oder einer Erfassung der Bedingungen, unter denen der Fahrzeugmotor so gesteuert wird, dass er automatisch gestoppt wird, und so lange kein Fehler erfasst wird, die zweite Steuereinheit (38) das Verbindungsventil (28) so steuert, dass das Verbindungsventil die zweite Einlassöffnung (224) des selektiven Ventils (22) mit der Quelle (8) von unter Druck stehendem Gas verbindet.

20. Verfahren nach Anspruch 18 oder 19, wobei es ferner den folgenden Schritt umfasst:
- c) das elektro-pneumatische Betriebsbremsmodul (32) wird von der zweiten Steuereinheit (38) so gesteuert, dass es der zweiten Kammer (C2) des pneumatischen Bremsstellglieds (4L, 4R) unter Druck stehendes Gas zuführt, um eine Bremswirkung zu erzeugen.

21. Verfahren nach einem der Ansprüche 19 oder 20, wobei es ferner die folgenden Schritte umfasst, die im Falle eines Fehlers, einer Erfassung einer manuellen Betätigung für eine Parkbremsaktivierung, oder einer Erfassung eines längeren Halts des Fahrzeugs erfolgen:
- d) die erste elektronische Steuereinheit (14) verhindert, dass die zweite Steuereinheit (38) das Verbindungsventil (28) steuert, und
- e) das Verbindungsventil (28) verbindet automatisch die zweite Einlassöffnung (224) des selektiven Ventils (22) mit einer Auslassöffnung (322) des elektropneumatischen Betriebsbremsmoduls (32).

22. Verfahren nach den Ansprüchen 19 und 20, wobei im Falle eines Versagens der Betriebsbremsfunktion oder im Falle, dass das elektro-pneumatische Betriebsbremsmodul (32) ein Zuführen von unter Druck stehendem Gas zu dem pneumatischen Bremsstellglied (4L, 4R) stoppt, das Verbindungsventil (28) von der zweiten Steuereinheit (38) so gesteuert wird, dass es in eine Position geschaltet wird, in der die zweite Einlassöffnung (224) des selektiven Ventils (22) mit der Auslassöffnung (322) des elektro-pneumatischen Betriebsbremsmoduls (32) verbunden ist und das Pneumatikparkbremsrelaisventil (18) zu einer Position bewegt wird, in der es der ersten Kammer (C1) des Bremsstellglieds (4L, 4R) kein unter Druck stehendes Gas bereitstellt, um eine Bremswirkung zu erzielen.

23. Verfahren zum Steuern eines elektronisch gesteuerten Pneumatikbremssystems (S) nach einem der Ansprüche 1 bis 16 in Kombination mit Anspruch 3, wobei im Falle eines Stopps des Fahrzeugs an einem Berghang oder einer Erfassung, dass das Fahrzeug dabei ist, an einem Berghang zu stoppen, das Verfahren wenigstens die folgenden Schritte umfasst:
- a) die erste elektronische Steuereinheit (14) schaltet in einen Parkbremsmodus, in dem sie das elektro-pneumatische Parkbremsmodul (16) so steuert, dass dieses Modul kein Gas abgibt,
- b) die zweite Steuereinheit (38) das Verbindungsventil (28) so steuert, dass das Verbindungsventil die zweite Einlassöffnung (224) des selektiven Ventils (22) mit der Quelle (8) von unter Druck stehendem Gas verbindet,
- c) das elektro-pneumatische Betriebsbremsmodul (32) von der zweiten Steuereinheit so gesteuert wird, dass es der zweiten Bremskammer (C1) des pneumatischen Bremsstellglieds (4L, 4R) unter Druck stehendes Gas zuführt, um eine Bremswirkung zu erzeugen.

## Revendications

1. Système de freinage pneumatique (S) à contrôle électronique pour un véhicule automobile (T), dans lequel ledit système comprend au moins :
- un actionneur de frein pneumatique (4L, 4R) entraînant un mécanisme de frein (2L, 2R) respectif ayant deux chambres de frein, une première chambre de frein (C1) comprenant un ressort (42) pour remplir une fonction de frein de stationnement et étant alimentée en gaz sous pression pour libérer le frein de stationnement et une seconde chambre de frein (C2) étant alimentée en gaz sous pression pour remplir une fonction de frein de service ;
- une première unité de commande électronique (14) conçue pour traiter des signaux électriques (S14, S'14) ;
- un module de frein de stationnement électro-pneumatique (16) commandé par la première unité de commande électronique (14) et conçu pour délivrer de manière sélective du gaz sous pression ;
- une seconde unité de commande électronique (38) conçue pour traiter des signaux électriques (S38, S'38) ;
- un module de frein de service électro-pneumatique (32) commandé par la seconde unité de commande électronique (38) et conçu pour délivrer de manière sélective du gaz sous pression ;
- une vanne-relais de frein de stationnement pneumatique (18)' conçue pour délivrer du gaz sous pression (A1) à la première chambre de frein (C1) et pilotée par la pression du gaz la plus élevée reçue entre celle reçue par le module de frein de stationnement électro-pneumatique (16) et celle reçue par une vanne de connexion (28);
- ladite vanne de connexion (28) étant conçue pour connecter de manière sélective un orifice de sortie (322) du module de frein de service électro-pneumatique (32) ou une source (8) de gaz sous pression avec une admission de pilotage (182) de la vanne-relais de frein de stationnement pneumatique (18).

2. Système de freinage pneumatique à contrôle électronique selon la revendication 1, dans lequel la vanne de connexion (28) est conçue pour connecter de manière sélective un orifice de sortie (322) du module de frein de service électro-pneumatique (32) ou la source (8) de gaz sous pression à une admission de la vanne-relais de frein de stationnement pneumatique (18) lorsque la pression du gaz délivré par l'orifice de sortie (322) du module de frein de service électro-pneumatique (32) ou une source (8) de gaz sous pression est supérieure à la pression du gaz délivré par le module de frein de stationnement électro-pneumatique (16).

3. Système de freinage pneumatique à contrôle électronique selon la revendication 1 ou 2, dans lequel une vanne sélective (22) est interposée entre le module de frein de stationnement électro-pneumatique (16), la vanne de connexion (28) et la vanne-relais de frein de stationnement pneumatique (18), la vanne sélective (22) ayant un premier orifice d'admission (222) connecté à un orifice de sortie (162) du module de frein de stationnement électro-pneumatique (16), un second orifice d'admission (224) connecté à un orifice de sortie de la vanne de connexion (28) et un orifice de sortie (226) connecté à un orifice d'admission de pilotage (182) de la vanne-relais de frein de stationnement pneumatique (18) et dans lequel la vanne de connexion (28) est conçue pour connecter de manière sélective le second orifice d'admission (224) de la vanne sélective (22) à un orifice de sortie (322) du module de frein de service électro-pneumatique (32) ou à une source (8) de gaz sous pression.

4. Système de freinage pneumatique à contrôle électronique selon la revendication 3, dans lequel la vanne de connexion est une électrovanne (28) avec une position par défaut dans laquelle elle connecte l'orifice de sortie (322) du module de frein de service électro-pneumatique (32) au second orifice d'admission (224) de la vanne sélective (22).

5. Système de freinage pneumatique à contrôle électronique selon la revendication 4, dans lequel la vanne de connexion à solénoïde (28) est commandée (S'38) par la seconde unité de commande électronique (38).

6. Système de freinage pneumatique à contrôle électronique selon la revendication 5, dans lequel la connexion électrique entre la seconde unité électronique (38) et la vanne de connexion à solénoïde (28) est commandée (S'14) par la première unité de commande électronique (14).

7. Système de freinage pneumatique à contrôle électronique selon la revendication 6, dans lequel un contacteur (50) est interposé le long d'une ligne de connexion électrique (L1) s'étendant entre la seconde unité de commande électronique (38) et la vanne de connexion à solénoïde (28) et dans lequel ce contacteur est commandé (S'14) par la première unité de commande électronique (14).

8. Système de freinage pneumatique à contrôle électronique selon l'une quelconque des revendications précédentes, dans lequel la vanne de connexion (28) est une électrovanne (28) à trois orifices / deux positions.

9. Système de freinage pneumatique à contrôle électronique selon l'une quelconque des revendications 1 à 7, dans lequel la vanne de connexion est une électrovanne (28) à cinq orifices / deux positions.

10. Système de freinage pneumatique à contrôle électronique selon la revendication 9, dans lequel la vanne de connexion (28) a, dans chaque position, un orifice d'admission (292, 293) connecté au module de frein de stationnement électro-pneumatique (16) et un orifice de sortie (296, 297) connecté à un module de commande de remorque (70) du système de freinage pneumatique (S) à contrôle électronique.

11. Système de freinage pneumatique à contrôle électronique selon la revendication 10, dans lequel dans une première position de la vanne de connexion (28), ses orifices d'admission et de sortie (292, 296), respectivement connectés au module de frein de stationnement électro-pneumatique (16) et au module de commande de remorque (70), sont en communication fluide et lequel, dans la seconde position de la vanne de connexion, ses orifices d'admission et de sortie (293, 297) sont déconnectés sur le plan fluide.

12. Système de freinage pneumatique à contrôle électronique selon l'une quelconque des revendications précédentes en combinaison avec la revendication 3, dans lequel la vanne sélective (22) est positionnée à l'extérieur de la vanne-relais de frein de stationnement pneumatique (18) qui est une vanne à un étage.

13. Système de freinage pneumatique à contrôle électronique selon l'une quelconque des revendications 1 à 11 en combinaison avec la revendication 3, dans lequel la vanne sélective (22) est intégrée à l'intérieur de la vanne-relais de frein de stationnement pneumatique (18).

14. Système de freinage pneumatique à contrôle électronique selon l'une quelconque des revendications précédentes en combinaison avec la revendication 3, dans lequel la vanne sélective (22) est à commande pneumatique.

15. Système de freinage pneumatique à contrôle électronique selon l'une quelconque des revendications précédentes en combinaison avec la revendication 3, dans lequel la vanne sélective (22) est conçue de sorte que son orifice de sortie (226) soit alimenté par le flux gazeux ayant la pression plus élevée entre son premier et son second orifice d'admission (222, 224).

16. Système de freinage pneumatique à contrôle électronique selon l'une quelconque des revendications précédentes en combinaison avec la revendication 3, dans lequel la vanne sélective (22) est une vanne à double contrôle.

17. Véhicule automobile (T), notamment camion, pourvu d'un système de freinage pneumatique (S) à contrôle électronique selon l'une quelconque des revendications précédentes.

18. Procédé pour commander un système de freinage pneumatique (S) à contrôle électronique selon l'une quelconque des revendications 1 à 16, dans lequel ce procédé comprend au moins les étapes suivantes :
a) en cas d'arrêt du moteur du véhicule, la première unité de commande électronique (14) bascule en mode de frein de stationnement dans lequel elle commande le module de frein de stationnement électro-pneumatique (16) de sorte que ce module ne délivre pas de gaz ;
b) en cas d'arrêt automatique du moteur du véhicule ou de détection d'états dans lesquels le moteur du véhicule est commandé pour être automatiquement arrêté et tant qu'aucune panne n'est détectée, la seconde unité de commande (38) commande la vanne de connexion (28) de sorte que la vanne de connexion connecte l'admission de pilotage (182) de la vanne-relais de frein de stationnement pneumatique (18) à la source (8) de gaz sous pression.

19. Procédé pour commander un système de freinage pneumatique (S) à contrôle électronique selon la revendication 18 en combinaison avec la revendication 3, dans lequel au cours de l'étape b), en cas d'arrêt automatique du moteur du véhicule ou de détection des états dans lesquels le moteur du véhicule est commandé pour être automatiquement arrêté et tant qu'aucune panne n'est détectée, la seconde unité de commande (38) commande la vanne de connexion (28) de sorte que la vanne de connexion connecte le second orifice d'admission (224) de la vanne sélective (22) à la source (8) de gaz sous pression.

20. Procédé selon la revendication 18 ou 19, dans lequel il comprend en outre l'étape suivante : c) le module de frein de service électro-pneumatique (32) est commandé par la seconde unité de commande (38) pour délivrer du gaz sous pression à la seconde chambre (C2) de l'actionneur de frein pneumatique (4L, 4R) afin de générer un effet de freinage.

21. Procédé selon l'une quelconque des revendications 19 ou 20, dans lequel il comprend en outre les étapes suivantes se produisant en cas de panne, de détection d'une action manuelle d'activation du frein de stationnement ou de détection d'un arrêt prolongé du véhicule :
d) la première unité de commande électronique (14) empêche la seconde unité de commande (38) de commander la vanne de connexion (28) ; et
e) la vanne de connexion (28) connecte automatiquement le second orifice d'admission (224) de la vanne sélective (22) à un orifice de sortie (322) du module de frein de service électro-pneumatique (32).

22. Procédé selon les revendications 19 et 20, dans lequel, en cas de panne de la fonction de frein de service ou si le module de frein de service électro-pneumatique (32) arrête la distribution de gaz sous pression à l'actionneur de frein pneumatique (4L, 4R), la vanne de connexion (28) est commandée par la seconde unité de commande (38) pour la basculer dans une position dans laquelle le second orifice d'admission (224) de la vanne sélective (22) est connecté à l'orifice de sortie (322) du module de frein de service électro-pneumatique (32) et la vanne-relais de frein de stationnement pneumatique (18) est basculée dans une position dans laquelle elle n'amène pas d'air sous pression à la première chambre (C1) de l'actionneur de frein (4L, 4R) afin de générer un effet de freinage.

23. Procédé pour commander un système de freinage pneumatique (S) à contrôle électronique selon l'une quelconque des revendications 1 à 16 en combinaison avec la revendication 3, dans lequel, en cas d'arrêt du véhicule sur une pente ou la détection d'un quasi-arrêt sur une pente, le procédé comprend au moins les étapes suivantes :
a) la première unité de commande électronique (14) bascule dans un mode de frein de stationnement dans lequel elle commande le module de frein de stationnement électro-pneumatique (16) de sorte que ce module ne délivre pas de gaz ;
b) la seconde unité de commande (38) commande la vanne de connexion (28) de sorte que la vanne de connexion connecte le second orifice d'admission (224) de la vanne sélective (22) avec la source (8) de gaz sous pression ;
c) le module de frein de service électro-pneumatique (32) est commandé par la seconde unité de commande pour délivrer du gaz sous pression à la seconde chambre de frein (C1) de l'actionneur de frein pneumatique (4L, 4R) afin de générer un effet de freinage.
